# EUROPÄISCHE PATENTSCHRIFT

(11) **EP 3 821 133 B1**
(45) Veröffentlichungstag und Bekanntmachung des Hinweises auf die Patenterteilung: **06.07.2022**
(21) Anmeldenummer: 19759508.5
(22) Anmeldetag: 06.08.2019
(51) Int. Cl.: F04D 17/12, F01D 25/24, F04D 29/42

(54) **TURBOMASCHINENGEHÄUSE MIT MINDESTENS EINEM DECKEL, TURBOMASCHINE, VERFAHREN ZUR HERSTELLUNG EINES DECKELS**
LID OF A TURBOMACHINE HOUSING, TURBOMACHINE HOUSING WITH A LID, TURBOMACHINE AND METHOD FOR THE MANUFACTURE OF A LID
COUVERCLE DE CHÂSSIS DE TURBOMACHINE, CHÂSSIS DE TURBOMACHINE POURVU D'UN COUVERCLE, TURBOMACHINE ET PROCÉDÉ DE FABRICATION D'UN COUVERCLE

(30) Priorität: 04.09.2018 EP 18192432
(43) Veröffentlichungstag der Anmeldung: 19.05.2021
(73) Patentinhaber: Siemens Energy Global GmbH & Co. KG, 81739 München (DE)
(72) Erfinder: KORBMACHER, Lars, 46147 Oberhausen (DE); MEYER, Marcus, 47199 Duisburg (DE); PETRI, Steffen, 99713 Rockstedt (DE); SCHICKMANN, Kai, 40489 Düsseldorf (DE)
(86) Internationale Anmeldenummer: PCT/EP2019/071101
(87) Internationale Veröffentlichungsnummer: WO 2020/048713

(56) Entgegenhaltungen:
- WO-A1-2016/041841
- GB-A- 780 463
- US-A- 979 634
- US-A- 2 760 719
- US-A- 2 775 945
- US-A- 3 131 877
- US-A1- 2017 082 070

## Beschreibung

Die Erfindung betrifft ein Turbomaschinengehäuse, insbesondere einer Radialturbomaschine, die technische Arbeit auf ein Prozessfluid oder von einem Prozessfluid fort überträgt, umfassend:
- einen Gehäusemantel, der eine im Wesentlichen zylindrische Form aufweist, wobei die Zylinderform sich entlang einer Achse erstreckt,
- einen ersten Deckel, der axial an einer ersten Stirnseite des Turbomaschinengehäuses abnehmbar befestigt verschließend vorgesehen ist,
- eine Zuströmung, die eine Einströmung eines Prozessfluids in das Turbomaschinengehäuse ermöglicht,
- eine Abströmung, die ein Ausströmen des Prozessfluids aus dem Turbomaschinengehäuse ermöglicht.

Daneben betrifft die Erfindung ein Verfahren zur Herstellung eines derartigen Deckels eines Turbomaschinengehäuse und eine Turbomaschine mit einem derartigen Turbomaschinengehäuse.

Die meisten Turbomaschinen erfahren eine in Axialrichtung der Welle gerichtete Anströmung einer Beschaufelung oder von Laufrädern mittels des Prozessfluids. Eine Einströmung in ein Turbomaschinengehäuse mit einem Deckel der eingangs definierten Art erfolgt herkömmlich meist in radialer Richtung. Hierzu weist das Turbomaschinengehäuse in der Regel einen radial zu der Drehachse ausgerichteten Zuströmstutzen. Eine andere Möglichkeit, die nicht Gegenstand der Erfindung ist, sieht vor, dass beispielsweise ein Radialverdichterlaufrad zum Zwecke der axialen Zuströmung an einem Wellenende fliegend gelagert ist, wie es beispielsweise von Verdichtern für Getriebeverdichter bekannt ist. Der radiale Einströmstutzen an dem Gehäuse geht mit verhältnismäßig hohen Kosten für diese aufwändige Geometrie einher und vergrößert den radialen Bauraumbedarf erheblich. Hinzu kommt, dass die notwendige Umlenkung aus der Radialrichtung in die Axialrichtung zur Zuströmung zu der Beschaufelung bzw. den Laufrädern einerseits verlustbehaftet ist und andererseits axialen sowie radialen Bauraum verbraucht.

Aus den Dokumenten WO 2016/041841 A1, US 3 131 877 A , US 2 760 719 A, US 979 634 A, GB 780 463 A, US 2 775 945 A , US 2017/082070 A1 ist es teilweise bekannt, einen Deckel mit integrierten Strömungsleitungen für unterschiedliche Zwecke auszubilden.

Die Erfindung hat es sich zur Aufgabe gemacht, derartige Nachteile zu vermeiden. Zur Lösung der erfindungsgemäßen Aufgabe wird ein Turbomaschinengehäuse, ein Verfahren zur Herstellung eines Deckels und eine Turbomaschine der eingangs definierten Art vorgeschlagen mit den jeweils in den Ansprüchen definierten zusätzlichen kennzeichnenden Merkmalen der Erfindung. Das verbindende Element der Erfindung ist das erfindungsgemäße Turbomaschinengehäuse, wobei die rückbezogenen Unteransprüche vorteilhafte Weiterbildungen der Erfindung beinhalten.

Ausdrücke, wie axial, radial, tangential oder Umfangsrichtung beziehen sich stets auf die zentrale Achse der Öffnung des Deckels bzw. die Achse einer sich durch die Öffnung des Deckels erstreckenden Welle im Falle einer bereits zusammengefügten Turbomaschine.

Unter einem Hauptanteil des Prozessfluids versteht die Erfindung einen Anteil von mindestens 51%, bevorzugt mindestens 80%, besonders bevorzugt 100%. Eine bevorzugte Ausbildung der Erfindung sieht vor, dass eine als Zuströmung oder Abströmung des Prozessfluids vorgesehene Strömungsleitung für zumindest einen Hauptanteil des Prozessfluids vorgesehen ist, dass eine als Zuströmung oder Abströmung des Prozessfluids vorgesehene Strömungsleitung als integraler Bestandteil des Deckels ausgebildet ist, so dass ein Hauptanteil des Prozessfluids von außen durch die Zuströmung des Deckels in das Innere des Turbomaschinengehäuses geleitet wird oder dass das ein Hauptanteil des Prozessfluids vom Inneren des Turbomaschinengehäuses durch die Abströmung des Deckels nach außen geleitet wird.

Dadurch, dass der erfindungsgemäße Deckel eine integrierte Strömungsleitung aufweist, die als Zuströmung oder Abströmung ausgebildet ist, können entsprechende Turbomaschinengehäuse, die einen derartigen Deckel aufweisen, ansonsten ohne eine herkömmliche Zuströmung oder Abströmung gestaltet werden. Der besondere Vorteil der erfindungsgemäßen neuen Funktionsmodularität liegt nicht nur darin, dass an einem Gehäusemantel eine entsprechende Strömungsleitung eingespart werden kann, wenn diese an einem erfindungsgemäßen Deckel vorgesehen wird, sondern auch darin, dass infolge der Zuleitung des Prozessfluids im Bereich des Deckels das Prozessfluid bereits vor Eintritt in die Turbomaschine besser in Richtung der Zuströmung zu der Beschaufelung bzw. den Laufrädern ausgerichtet ist. In anderen Worten: Erfindungsgemäß ist die Zuleitung des Prozessfluids zu der Turbomaschine mit einem erfindungsgemäßen Deckel bereits erheblich axialer als bei einer herkömmlich radialen Zuströmung durch einen radialen Einströmstutzen des Gehäuses.

Eine vorteilhafte Weiterbildung der Erfindung sieht vor, dass der Deckel Versorgungsleitungen für eine Gasdichtung und/oder eine Ölheizung und/oder Sensoren, insbesondere Drucksensoren, als in den Deckel integrierte Bestandteile aufweist. Diese Anordnung ist besonders zweckmäßig, weil der Deckel besonders bevorzugt Träger einer Wellendichtung und/oder Träger eines Radiallagers und/oder Installationsort für Drucksensoren und/oder Temperatursensoren sein kann.

Eine andere vorteilhafte Weiterbildung sieht vor, dass die integrierte Strömungsleitung den Gesamtstrom des Prozessfluids in Teilströme aufteilende Kanäle aufweist. Diese derart aufteilende Kanalstruktur ermöglicht besonders zweckmäßig die strömungstechnische Vorbereitung des Prozessfluids auf die Zuströmung zu der nachfolgenden aerodynamischen Komponente. Diese ist in der Regel ein rotierendes Bauteil, beispielsweise ein Radialverdichterlaufrad oder eine Axialbeschaufelung. Die einzelnen Kanäle können hierbei lediglich durch Leitschaufeln voneinander in Umfangsrichtung getrennt sein oder auch als Kanäle im engeren Sinn mit voneinander in Umfangsrichtung trennenden massiveren Kanalwänden ausgebildet sein. Auf diese Weise ist es möglich, dem aus den Kanälen ausströmenden Prozessfluid einen bestimmten Drall aufzuprägen, der für eine optimale Zuströmung zu dem Rotor sorgt.

Eine weitere vorteilhafte Weiterbildung der Erfindung sieht vor, dass ein Lagerbockunterteil zur Unterstützung eines Radiallagers für die entlang der Achse sich erstreckende Welle als integraler Bestandteil des Deckels ausgebildet ist.

Bei einer Turbomaschine, die ein Gehäuse mit einem stirnseitig vorgesehenen erfindungsgemäßen Deckel aufweist, muss der Deckel zahlreiche Funktionen erfüllen. In der Regel erfordern diese Funktionen Zu- und Ableitungsleitungen für verschiedene Betriebsfluide und daneben auch Durchführungen für Versorgungsleitungen für elektrischen Strom sowie für Signalleitungen. Daneben kann der Deckel selbst auch als Träger für zahlreiche mittels dieser Leitungen zu versorgende Aggregate sein. Beispielsweise kann der Deckel Träger einer Wellendichtung und der Wellenlagerung sein, insbesondere Träger für ein Radiallager. Werden entsprechend die Versorgungsleitungen für diese Aggregate zumindest teilweise durch das Volumen des Deckels verlaufend gelegt, so werden herkömmlich Bohrungen für den entsprechenden Leitungsverlauf in dem Deckel vorgesehen. Das ist sehr aufwändig, zumal entsprechende Bohrungen nur mit gerader Verlaufsachse möglich sind und bei jedem Knick des Leitungsverlaufs eine separate Bohrung gefertigt werden muss, die häufig verschlossen werden muss, da nur ein axialer Teilbereich der Bohrung für den Leitungsverlauf benötigt wird.

Eine konventionelle spanende Fertigung eines erfindungsgemäßen Deckels ist verhältnismäßig schwierig bzw. aufwändig. Als eine bevorzugte Herstellungsmöglichkeit erkennt die Erfindung, dass der Deckel oder Teile einer Gussform des Deckels mittels eines additiven Fertigungsverfahrens vorteilhaft hergestellt werden können. Die besonderen Freiheitsgrade in der volumetrisch geometrischen Erzeugung freier dreidimensionaler Formen mittels eines additiven Fertigungsverfahrens können von der Erfindung sehr gut ausgenutzt werden, da die strömungstechnische Optimierung der Strömungsleitung zur Zuströmung oder Abströmung eines Prozessfluids zu der Turbomaschine durch den Deckel auf diese Weise kompromisslos durchgeführt werden kann. Daneben ist es möglich, die entsprechenden Versorgungsleitungen als integralen Bestandteil des Deckels für Wellendichtungen, Radiallagerungen, Ölheizungen und verschiedene Sensoren in den verbleibenden volumetrischen Freiräumen optimiert zu verlegen. Versorgungsleitungen für die Versorgung einer Wellendichtung bzw. einer Gasdichtung, für die Ölheizung können als Leitungen - vergleichbar wie Schläuche - in dem Volumen des Deckels gelegt werden, so dass zur Optimierung der Strömungsleitung für das Prozessfluid nahezu keine Einschränkungen vorliegen. Eine Zuleitung von Prozessfluid, die erfindungsgemäß als eine Strömungsleitung integraler Bestandteil des Deckels ist, kann mittels moderner Strömungsoptimierer derart geometrisch gestaltet werden, dass das Prozessfluid zunächst in einem in dem Deckel vorgesehenen Sammelringraum eingeleitet wird und anschließend der Sammelringraum den Gesamtstrom des Prozessfluids in verschiedene Teilströme verteilt auf anschließende Kanäle zur Zuführung zu dem strömungsleitenden Rotor der Turbomaschine aufteilt. Besonders vorteilhaft weist der Sammelringraum einen entlang des Umfangs nicht konstanten Querschnitt auf. Zweckmäßig ist der Sammelringraum im Bereich der Zuströmung des Prozessfluids am geräumigsten ausgebildet.

Die in den Deckel integrierte Strömungsleitung im Falle der Zuleitung des Prozessfluids zu dem Rotor kann das Prozessfluid axial direkt vor beispielsweise das erste Laufrad eines Radialverdichters führen, so dass einerseits eine strömungsoptimierte Zuströmung erfolgt und andererseits eine große Einsparung axialen Bauraums stattfindet.

Im Folgenden ist die Erfindung anhand eines speziellen Ausführungsbeispiels unter Bezugnahme auf Zeichnungen näher beschrieben. Es zeigen:
- Figur 1: eine schematische Darstellung eines Längsschnitts entlang einer Achse durch einen erfindungsgemäßen Deckel,
- Figur 2: eine schematische Darstellung eines axialen Längsschnitts durch eine erfindungsgemäße Turbomaschine mit einem erfindungsgemäßen Turbomaschinengehäuse.

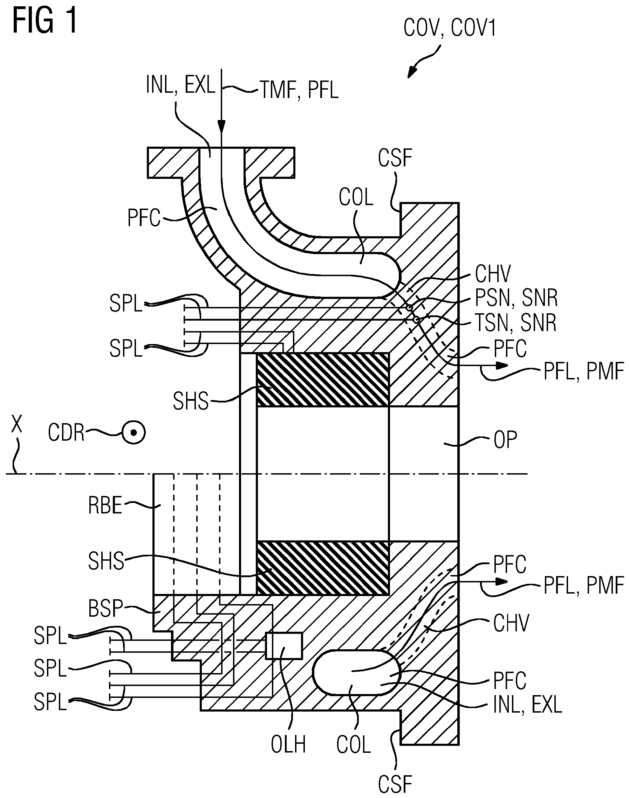

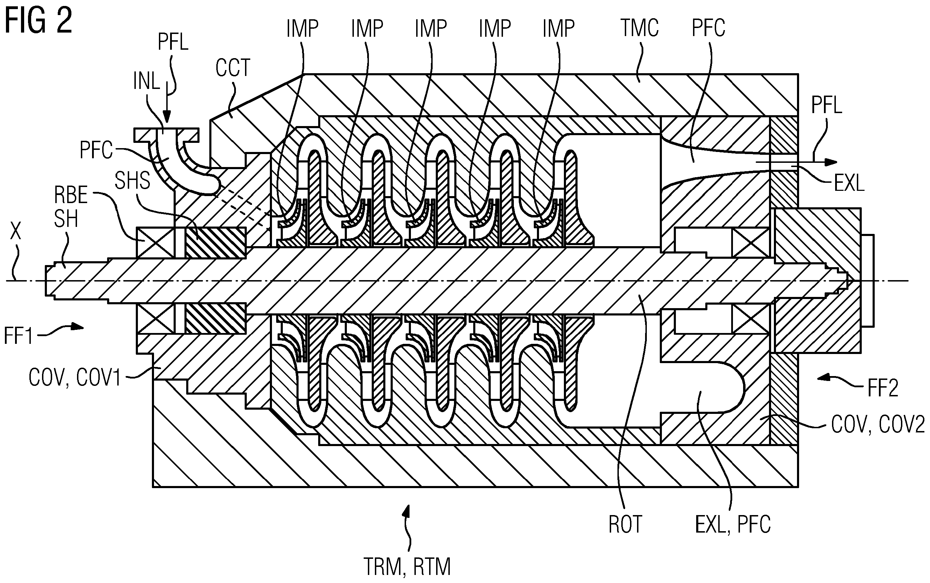

Figur 1 zeigt schematisch einen Längsschnitt durch einen erfindungsgemäßen Deckel COV eines Turbomaschinengehäuses TMC, wie es im Zusammenhang mit einer Turbomaschine TRM in Figur 2 dargestellt ist. Die in Figur 2 dargestellte Turbomaschine TRM ist als Radialturbomaschine RTM ausgeführt, wobei die Erfindung grundsätzlich auch in axialen Turbomaschinen angewendet werden kann. Identische Bezugszeichen in den Figuren bezeichnen jeweils funktionsidentische Gegenstände.

Die in Figur 2 dargestellte Turbomaschine TRM ist ein Radialverdichter, der technische Arbeit auf ein Prozessfluid PFL überträgt. Konkret wird das Prozessfluid PFL mittels Laufrädern IMP eines Rotors ROT bei der Durchströmung beschleunigt und in Diffusoren hinter den entsprechenden Laufrädern IMP unter Ausbildung einer Druckerhöhung abgebremst. Das Prozessfluid PFL durchläuft dementsprechend nach Einströmung durch eine Zuströmung INL in die Turbomaschine TRM bis zum Austritt durch eine Abströmung EXL aus der Turbomaschine TRM eine Druckerhöhung. Grundsätzlich ist die Erfindung auch für einen umgekehrten Prozess - eine Entspannung eines Prozessfluids unter Gewinnung technischer Arbeit - möglich.

Der in Figur 1 dargestellte Deckel COV weist eine sich entlang einer Achse X erstreckende Öffnung OP auf. Zur axialen Hindurchführung einer sich entlang dieser Achse X erstreckenden Welle SH, wie dies auch in Figur 2 dargestellt ist. Zum Zwecke der Anlage an einem Gehäusemantel CCT des Turbomaschinengehäuses TMC weist der Deckel eine sich entlang einer Umfangsrichtung CTR zu der Achse X erstreckende Anlagefläche SF auf. Die Anlagefläche dient einerseits dem mechanischen Widerstand gegen den Differenzdruck zwischen dem Innendruck und dem Umgebungsdruck im Betrieb der Turbomaschine und andererseits der Abdichtung gegen einen Austritt des Prozessfluids PFL aus der Turbomaschine TRM in die Umgebung. Zum Zwecke der Abdichtung können auch hier nicht dargestellte Dichtungselemente vorgesehen sein.

Der Deckel COV weist eine als Zuströmung INL oder Abströmung EXL des Prozessfluids PFL vorgesehene Strömungsleitung PFC als integralen Bestandteil des Deckels COV auf. In Figur 2 ist linksseitig ein erster Deckel COV1 vorgesehen, der zeigt, dass ein entsprechender Deckel COV eine als Zuströmung INL vorgesehene Strömungsleitung PFC aufweist und rechtsseitig ist ein zweiter Deckel COV2 wiedergegeben, der den Fall zeigt, dass eine Strömungsleitung PFC, die in den Deckel COV integriert ist, als Abströmung EXL für das Prozessfluid PFL ausgebildet ist. Der erste Deckel COV1 befindet sich auf einer ersten Stirnseite FF1 des Turbomaschinengehäuses TMC und der zweite Deckel COV2 befindet sich auf einer zweiten Stirnseite FF2.

Die Figur 1 zeigt den ersten Deckel COV1 mit der als Zuströmung INL ausgebildeten Strömungsleitung PFC für das Prozessfluid PFL, der in der Figur 2 auf der ersten Stirnseite FF1 vorgesehen ist. Der Deckel COV bzw. der erste Deckel COV1, der in der Figur 1 dargestellt ist, ist mittels "Additive Manufacturing" hergestellt, ebenso wie der zweite Deckel COV2. Diese Herstellungsmethode ermöglicht eine besonders freie Gestaltung der dreidimensionalen Geometrie der verschiedenen Funktionselemente des Deckels COV. Der erste Deckel COV1 ist Träger von zusätzlichen Funktionselementen, beispielsweise einer Ölheizung OLH, eines Radiallagers RBE und einer Wellendichtung SHS, die als Gasdichtung ausgebildet ist. Es sind Versorgungsleitungen SPL vorgesehen für die Wellendichtung SHS, das Radiallager RBE und Sensoren SNR, einen Temperatursensor TSN und einen Drucksensor PSN zur Messung von Druck und Temperatur des Prozessfluids PFL in der Zuströmung INL. Die Ölheizung OLH bereitet ein Lageröl zur Versorgung des Radiallagers RBE vor, wobei die Versorgungsleitungen SPL für diese Ölheizung OLH integraler Bestandteil des Deckels COV sind. Diese Versorgungsleitungen SPL für die Ölheizung OLH können einerseits eine elektrische Heizung versorgen und andererseits ein erhitztes Fluid der Ölheizung OLH zuführen bzw. von der Ölheizung OLH fortführen.

Die Strömungsleitung PFC, die als Zuleitung INL oder auch als Ableitung EXL ausgebildet sein kann, umfasst einen Sammelraum COL (Sammelringraum), der sich im Wesentlichen ringförmig in Umfangsrichtung CDR um die Achse X erstreckt und von diesem Sammelraum ausgehende einzelne Kanäle CHV, die der nachfolgenden Beschaufelung bzw. Laufrädern IMP des Rotors ROT das Prozessfluid PFL strömungstechnisch optimiert ausgerichtet zuführen. Der Sammelraum COL weist einen entlang des Umfangs nicht konstanten Querschnitt auf.

## Patentansprüche

1. Turbomaschinengehäuse (TMC), insbesondere einer Radialturbomaschine (RTM), die technische Arbeit auf ein Prozessfluid (PFL) oder von einem Prozessfluid (PFL) fort überträgt, umfassend:
- einen Gehäusemantel (CCT), der eine im Wesentlichen zylindrische Form aufweist, wobei die Zylinderform sich entlang einer Achse (X) erstreckt,
- einen ersten Deckel (COV1), der axial an einer ersten Stirnseite (FF1) des Turbomaschinengehäuses (CCT) abnehmbar befestigt verschließend vorgesehen ist,
- eine Zuströmung (INL), die eine Einströmung eines Prozessfluids (PFL) in das Turbomaschinengehäuse (TMC) ermöglicht,
- eine Abströmung (EXL), die ein Ausströmen des Prozessfluids (PFL) aus dem Turbomaschinengehäuse (TMC) ermöglicht,
wobei der erste Deckel (COV1) umfasst:
- eine sich entlang der Achse (X) erstreckende Öffnung (OP) zur axialen Hindurchführung einer sich entlang dieser Achse (X) erstreckenden Welle (SH),
- eine sich entlang einer Umfangsrichtung (CDR) zu der Achse (X) erstreckende Anlagefläche (CSF) zur Anlage an dem Gehäusemantel (CCT) des Turbomaschinengehäuses (TMC),
wobei eine als Zuströmung (INL) oder Abströmung (EXL) des Prozessfluids (PFL) vorgesehene Strömungsleitung (PFC) als integraler Bestandteil des Deckels (COV) ausgebildet ist,
**dadurch gekennzeichnet,**
**dass** der Deckel (COV) mittels der Anlagefläche (CSF) radial innerhalb des Gehäusemantels (CCT) angeordnet ist, wobei der Deckel (COV) mit der Anlagefläche (CSF) an einer axialen inneren Fläche eines radialen inneren Flanschs des Gehäusemantels (CCT) angeordnet ist.

2. Turbomaschinengehäuse (TMC) nach Anspruch 1, wobei Versorgungsleitungen (SPL) für eine Wellendichtung, insbesondere Gasdichtung (SHS) und/oder eine Wellenlagerung und/oder eine Ölheizung (OLH) und/oder Sensoren (SNR), insbesondere Drucksensoren (PSN) in den Deckel (COV) integriert sind.

3. Turbomaschinengehäuse (TMC) nach mindestens einem der Ansprüche 1 oder 2, wobei die integrierte Strömungsleitung (PFC) den Gesamtstrom (TMF) des Prozessfluids (PFL) in Teilströme (PMF) aufteilende Kanäle (CHV) aufweist.

4. Turbomaschinengehäuse (TMC) nach Anspruch 3, wobei die Kanäle (CHV) derart geformt sind, dass das dem aus den Kanälen (CHV) ausströmenden Prozessfluid (PFL) ein bestimmter Drall aufgeprägt ist.

5. Turbomaschinengehäuse (TMC) nach mindestens einem der Ansprüche 1 bis 4, wobei ein Lagerbockunterteil (BSP) zur Unterstützung eines Radiallagers (RBE) für die entlang der Achse (X) sich erstreckende Welle (SH) als integraler Bestandteil des Deckels (COV) ausgebildet ist.

6. Turbomaschinengehäuse (TMC) nach mindestens einem der Ansprüche 1 bis 5, wobei der Deckel (COV) oder Teile einer Gussform des Deckels (COV) mittels eines additiven Fertigungsverfahrens hergestellt sind.

7. Verfahren zur Herstellung des Deckels (COV) des Turbomaschinengehäuse (TMC) nach mindestens einem der Ansprüche 1 bis 6, wobei der Deckel (COV) oder Teile einer Gussform des Deckels (COV) mittels eines additiven Fertigungsverfahrens hergestellt werden.

8. Turbomaschine (TRM), insbesondere Radialturbomaschine (RTM), umfassend einen Rotor (ROT) und ein Turbomaschinengehäuse (TMC)
wobei das Turbomaschinengehäuse (TMC) nach einem der Ansprüche 1 bis 6 ausgebildet ist.

## Claims

1. Turbomachine housing (TMC), in particular of a radial turbomachine (RTM), which transfers technical work to a process fluid (PFL) or from a process fluid (PFL), comprising:
- a housing shell (CCT) that has a substantially cylindrical shape, wherein the cylindrical shape extends along an axis (X),
- a first cover (COV1) that is provided axially on a first front face (FF1) of the turbomachine housing (CCT) so as to be removably fastened in a closing manner,
- an inflow (INL) that allows a process fluid (PFL) to flow into the turbomachine housing (TMC),
- an outflow (EXL) that allows the process fluid (PFL) to flow out of the turbomachine housing (TMC),
wherein the first cover (COV1) comprises:
- an opening (OP), extending along the axis (X), for the axial passage of a shaft (SH) extending along this axis (X),
- a contact face (CSF), extending in a circumferential direction (CDR) with respect to the axis (X), for contact with the housing shell (CCT) of the turbomachine housing (TMC),
wherein a flow line (PFC), provided as the inflow (INL) or outflow (EXL) for the process fluid (PFL), is configured as an integral constituent of the cover (COV),
**characterized**
**in that** the cover (COV) is arranged radially inside the housing shell (CCT) by means of the contact face (CSF), wherein the cover (COV) is arranged with the contact face (CSF) against an axial inner face of a radial inner flange of the housing shell (CCT) .

2. Turbomachine housing (TMC) according to Claim 1, wherein supply lines (SPL) for a shaft seal, in particular a gas seal (SHS) and/or a shaft bearing and/or oil heating (OLH) and/or sensors (SNR), in particular pressure sensors (PSN), are integrated in the cover (COV).

3. Turbomachine housing (TMC) according to at least one of Claims 1 and 2, wherein the integrated flow line (PFC) has channels (CHV) that divide the total flow (TMF) of the process fluid (PFL) into partial flows (PMF).

4. Turbomachine housing (TMC) according to Claim 3, wherein the channels (CHV) are formed such that the process fluid (PFL) flowing out of the channels (CHV) has a particular swirl imparted to it.

5. Turbomachine housing (TMC) according to at least one of Claims 1 to 4, wherein a bearing block base (BSP) for supporting a radial bearing (RBE) for the shaft (SH) extending along the axis (X) is configured as an integral constituent of the cover (COV).

6. Turbomachine housing (TMC) according to at least one of Claims 1 to 5, wherein the cover (COV) or parts of a casting mold of the cover (COV) have been produced by means of an additive manufacturing process.

7. Method for producing the cover (COV) of the turbomachine housing (TMC) according to at least one of Claims 1 to 6, wherein the cover (COV) or parts of a casting mold of the cover (COV) are produced by means of an additive manufacturing process.

8. Turbomachine (TRM), in particular radial turbomachine (RTM), comprising a rotor (ROT) and a turbomachine housing (TMC),
wherein the turbomachine housing (TMC) is configured according to one of Claims 1 to 6.

## Revendications

1. Châssis (TMC) de turbomachine, notamment d'une turbomachine (RTM) radiale, qui transmet le travail technique à un fluide (PFL) de processus ou d'un fluide (PFL) de processus, comprenant :
- une enveloppe (CCT) de châssis, qui a une forme essentiellement cylindrique, la forme cylindrique s'étendant suivant un axe (X),
- un premier couvercle (COV1), qui est prévu, se fermant en étant fixé avec possibilité d'être retiré, axialement à un premier côté (FF1) frontal du châssis (CCT) de la turbomachine,
- une entrée (INL), qui rend possible une entrée d'un fluide (PFL) de processus dans le châssis (TMC) de la turbomachine,
- une sortie (EXL), qui rend possible une sortie du fluide (PFL) de processus du châssis (TMC) de la turbomachine,
dans lequel le premier couvercle (COV1) comprend :
- une ouverture (OP), s'étendant suivant l'axe (X) de passage axial d'un arbre (SH), s'étendant suivant cet axe (X),
- une surface (CSF) de contact, s'étendant suivant une direction (CDR) de pourtour par rapport à l'axe (X) pour le contact sur l'enveloppe (CCT) du châssis (TMC) de la turbomachine,
dans lequel un conduit (PFC) d'écoulement, prévu comme entrée (INL) ou comme sortie (EXL) du fluide (PFL) de processus, est constitué sous la forme d'une partie constitutive intégrale du couvercle (COV),
**caractérisé en ce que** le couvercle (COV) est disposé, au moyen de la surface (CSF) de contact, radialement à l'intérieur de l'enveloppe (CCT) du châssis, dans lequel le couvercle (COV) est disposé par la surface (CSF) de contact sur une surface intérieure axiale d'une bride intérieure radiale de l'enveloppe (CCT) du châssis.

2. Châssis (TMC) de turbomachine suivant la revendication 1, dans lequel des conduits (SPL) d'alimentation pour une étanchéité d'arbre, notamment une étanchéité (SHS) au gaz et/ou un support d'arbre et/ou un chauffage (OLH) d'huile et/ou des capteurs (SNR), notamment des capteurs (PSN) de pression, sont intégrés au couvercle (COV).

3. Châssis (TMC) de turbomachine suivant au moins l'une des revendications 1 ou 2, dans lequel le conduit (PFC) d'écoulement intégré a des canaux (CHV) répartissant le courant (TMF) d'ensemble du fluide (PFL) de processus en des courants (PMF) partiels.

4. Châssis (TMC) de turbomachine suivant la revendication 3, dans lequel les canaux (CHV) sont formés de manière à imprimer un tourbillonnement déterminé au fluide (PFL) de processus sortant des canaux (CHV).

5. Châssis (TMC) de turbomachine suivant au moins l'une des revendications 1 à 4, dans lequel une partie (BSP) inférieure de palier est constituée, en tant que partie constitutive intégrale du couvercle (COV), pour le soutien d'un palier (RBE) radial de l'arbre (SH) s'étendant suivant l'axe (X).

6. Châssis (TMC) de turbomachine suivant au moins l'une des revendications 1 à 5, dans lequel le couvercle (COV) ou des parties d'une forme coulée du couvercle (COV) sont fabriqués au moyen d'un procédé de fabrication additive.

7. Procédé de fabrication du couvercle (COV) du châssis (TMC) de turbomachine suivant au moins l'une des revendications 1 à 6, dans lequel on fabrique le couvercle (COV) ou des parties d'une forme coulée du couvercle (COV) au moyen d'un procédé de fabrication additive.

8. Turbomachine (TRM), notamment turbomachine (RTM) radiale, comprenant un rotor (ROT) et un châssis (TMC) de turbomachine, dans laquelle le châssis (TMC) de turbomachine est constitué suivant l'une des revendications 1 à 6.
